# DEMANDE DE BREVET EUROPEEN

(11) **EP 4 365 985 A1**
(43) Date de publication de la demande: **08.05.2024**
(21) Numéro de dépôt: 23206264.6
(22) Date de dépôt: 26.10.2023
(51) Int. Cl.: H01M 4/139, H01M 4/04, H01M 4/13, H01M 4/1391, H01M 4/1397, H01M 4/485, H01M 4/58, H01M 4/60, H01M 6/50, H01M 10/052, H01M 10/054

(54) **PRÉPARATION D'UNE ÉLECTRODE DE RÉFÉRENCE À PARTIR D'UN MATÉRIAU ÉLECTRO-ACTIF À UN ÉTAT DE CHARGE INTERMÉDIAIRE**

(30) Priorité: 27.10.2022 FR 2211198
(71) Demandeur: Commissariat à l'énergie atomique et aux énergies alternatives, 75015 Paris (FR)
(72) Inventeur: GUTEL, Thibaut, 38054 Grenoble cedex 09 (FR); BOUVET, Justin, 38054 Grenoble cedex 09 (FR); GUTEL, Elise, 38054 Grenoble cedex 09 (FR); GENIES, Sylvie, 38054 Grenoble cedex 09 (FR)
(74) Mandataire: Cabinet Nony

(57) **Abrégé**

La présente invention concerne un procédé de préparation d'une électrode de référence, directement fonctionnelle au sein d'une cellule d'un système de stockage électrochimique, comprenant au moins les étapes consistant en :
(i) disposer d'au moins un matériau électro-actif dont la réaction rédox associée présente un potentiel électrochimique constant à des états de charge intermédiaire ;
(ii) obtenir, par réaction chimique à l'aide d'au moins un agent oxydant et/ou d'au moins un agent réducteur, le matériau électro-actif dans un état de charge intermédiaire ; et
(iii) formuler ledit matériau électro-actif obtenu à l'issue de l'étape (ii) au sein d'une électrode, pour former ladite électrode de référence.

## Description

### Domaine technique

La présente invention concerne le domaine des systèmes de stockage électrochimique, plus précisément le domaine des dispositifs électrochimiques de type accumulateurs ou batteries métal-ion, notamment des batteries sodium-ion, lithium-ion, potassium-ion, magnésium-ion ; des batteries lithium-soufre ou lithium-air ; et supercondensateurs, par exemple des supercondensateurs hybrides au potassium.

Elle vise plus précisément à proposer une nouvelle méthode de préparation d'une électrode de référence directement fonctionnelle et utilisable dans une cellule d'un tel système de stockage électrochimique, sans nécessiter de recourir à une activation préalable de l'électrode par voie électrochimique.

### Technique antérieure

Les dispositifs électrochimiques de type batteries, par exemple batteries au lithium, et supercondensateurs, trouvent de multiples applications, notamment dans l'alimentation des systèmes embarqués de faible épaisseur, comme les cartes de crédit, les étiquettes intelligentes, dans l'alimentation des téléphones mobiles, le stockage de l'énergie de cellules photovoltaïques, ou encore dans l'alimentation des véhicules électriques.

Divers systèmes de stockage électrochimiques ou générateurs électrochimiques ont été développés, tels que des batteries métal-ion, notamment des batteries sodium-ion, lithium-ion, potassium-ion, magnésium-ion ; des batteries lithium-soufre ou lithium-air ; et plus récemment des supercondensateurs.

Ces générateurs électrochimiques, par exemple au lithium, fonctionnent classiquement sur le principe d'insertion et désinsertion (ou intercalation-désintercalation) d'un métal, tel que le lithium, sur au moins une électrode. En particulier, dans un accumulateur lithium-ion, les cations Li⁺ font ainsi des allers-retours entre les électrodes, respectivement positive et négative, à chaque charge et décharge de l'accumulateur. Le matériau actif de l'électrode positive est capable de libérer des ions lithium au moment de la charge et d'incorporer des ions lithium au moment de la décharge.

Les supercondensateurs constituent des dispositifs de stockage d'énergie permettant d'obtenir une densité de puissance et une densité d'énergie intermédiaires entre celles fournies par des batteries électrochimiques et par des condensateurs électrolytiques classiques. En outre, ils restituent plus rapidement de l'énergie qu'une batterie électrochimique. Dans les supercondensateurs standards, dits encore « symétriques », les deux électrodes (électrode positive et électrode négative) sont toutes deux à base de carbone activé et l'électrolyte est classiquement à base de sel d'ammonium, typiquement du tétrafluoroborate de tétraéthylammonium (Et₄NBF₄) dans l'acétonitrile ou dans du carbonate de propylène. Il a également été développé des supercondensateurs, dits « hybrides » ou « asymétriques », se situant entre les supercondensateurs symétriques classiquement utilisés à base de carbone activé et les batteries. Une des électrodes, classiquement l'électrode positive, est à base de carbone activé ; l'autre électrode, classiquement l'électrode négative, étant constituée à partir d'un matériau de batterie rechargeable. Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

Il est important, pour les systèmes de stockage électrochimiques, qu'il s'agisse des batteries ou des supercondensateurs, de pouvoir connaître et suivre l'évolution du potentiel de chaque électrode indépendamment et par rapport à une électrode de potentiel connu, lors du fonctionnement de la cellule électrochimique. En particulier, pour des cellules mettant en oeuvre des électrolytes à base de solvant(s) organique(s), il importe que la cellule du système électrochimique ne fonctionne pas en dehors de la plage de stabilité électrochimique du ou desdits solvants organiques, pour ne pas engendrer de dégradations et notamment la production de gaz. De même, il est important de contrôler, via la limitation en potentiel, l'état de lithiation de certains composés tels que les oxydes lamellaires LiₓMO₂ dont la structure est instable pour x<0,5 (cas du LiCoO₂) ou x<0,2 (LiₓMO₂ avec M=Ni, Co, Mn à faible teneur en Co), ou encore éviter l'électrodépôt de lithium à l'état métallique à l'électrode négative à des potentiels inférieurs à 0V *vs* Li⁺/Li. Afin de contrer l'apparition de tout phénomène indésirable, il importe de pouvoir connaître et suivre l'évolution du potentiel de chaque électrode, lors du fonctionnement de la cellule électrochimique.

Pour cela, il est souhaitable de pouvoir introduire une électrode dite de référence au sein du système électrochimique. Une électrode de référence doit présenter un potentiel stable et connu, permettant de connaître à chaque instant le potentiel de chacune des électrodes positive et négative du système.

D'une manière générale, comme répertorié par exemple dans le document Cengiz *et al.* [1] ou proposé dans les documents US 2009/0104510 et US 9,379,418, les électrodes de référence proposées pour des systèmes de stockage électrochimique, notamment pour des batteries métal-ion, telles que des batteries lithium-ion, sodium-ion, calcium-ion, lithium-ion, potassium-ion, magnésium-ion, ou pour des supercondensateurs, reposent sur la mise en oeuvre, comme matériaux d'électrode :
- de métaux purs, tels que le lithium, le sodium ou le potassium, ou des alliages à base de lithium (par exemple, LiₓSn, LiₓBi, LiₓAu, LiₓIn, LiₓSi, LiₓAl, etc.), respectivement à base de sodium, de potassium, etc. ; et
- de matériaux d'intercalation/insertion de type LiMO₂ avec M représentant Co, Ni ou Mn ; LiM'₂O₄ avec M' représentant Ni ou Mn ; LiM"PO₄ avec M" représentant Fe, Co, Mn ou Ni ; ou de type Li₄Ti₅O₁₂.

Pour être adaptés à une mise en oeuvre comme électrode de référence, les composés doivent présenter, lors du processus de charge/décharge galvanostatique, un plateau de potentiel (réaction redox associée présentant un potentiel électrochimique constant), et leur potentiel thermodynamique doit être indépendant de la concentration en sel de l'électrolyte.

Pour ce qui est des métaux et alliages, ils sont directement utilisables dans un système à trois électrodes, mais présentent une instabilité potentielle au cours du temps/cyclage, en raison notamment de leur potentiel thermodynamique très bas. En effet, leur pouvoir réducteur induit une forte réactivité avec les électrolytes, et leur potentiel inférieur à celui du couple H₂O/H₂ ou O₂/H₂O (ce qui autorise des réactions spontanées avec H₂O et O₂) nécessite un contrôle de l'atmosphère lors des étapes d'assemblage. De plus, le potentiel thermodynamique d'une électrode à base de métaux purs est susceptible de varier en fonction des variations de concentration en ions lithium dans l'électrolyte. Certes, on peut considérer que la concentration moyenne en ions lithium dans l'espace inter-électrodes ne change pas. Toutefois, des gradients de concentration peuvent s'établir, plus importants lorsque les courants appliqués sont importants, et sont donc susceptibles de faire varier le potentiel thermodynamique de l'électrode de référence. En outre, il y a également un risque de variation du potentiel de l'électrode de référence au cours du vieillissement, car la concentration des ions lithium dans l'électrolyte est susceptible de varier du fait des mécanismes de dégradation (assèchement de la phase liquide).

Ces inconvénients ne concernent pas les autres matériaux d'électrodes précités, pour lesquels le potentiel thermodynamique de l'électrode est fixé par le nombre de sites actifs/inactifs ou la concentration en lithium (respectivement, en sodium, potassium) dans l'alliage. Les matériaux présentant un large plateau de potentiel en fonction du taux d'insertion sont particulièrement avantageux, puisqu'ils permettent une stabilité du potentiel, indépendamment des changements d'état de lithiation du matériau susceptibles d'intervenir au cours du vieillissement.

Les matériaux d'insertion, par exemple le Li₄Ti₅O₁₂ ou le LiFePO₄, caractérisés par un comportement biphasique, sont donc privilégiés. En particulier, la stabilité chimique, thermique et électrochimique du LiFePO₄ (ou LFP), ainsi que son potentiel moyen d'oxydoréduction plus élevé que le potentiel des autres matériaux redox précités et constant sur une large fenêtre de taux de lithiation, font du LFP un matériau d'intérêt pour des électrodes de référence.

Plus récemment, le CEA a également proposé la mise en oeuvre, pour la préparation d'électrodes de référence, de matériaux organiques électro-actifs de type P (donneur d'électrons) ou de type N (accepteur d'électrons).

Cependant, les électrodes à base des matériaux précités (matériaux d'insertion/d'intercalation du lithium, ou matériaux de type P ou N) requièrent d'être préalablement « activées », afin d'être opérationnelles comme électrodes de référence. En effet, ces matériaux électroactifs ne présentent un potentiel électrochimique fixe que pour des états de charge (états d'oxydation/réduction, ou encore états de lithiation) intermédiaires (d'environ 5% à 95% d'état de charge (SoC)), ce qui implique de conditionner au préalable les électrodes afin d'atteindre le plateau de potentiel (généralement, à environ 50% de SoC). Cette étape complexifie la préparation et la mise en oeuvre de ces électrodes de référence. A l'heure actuelle, l'activation des électrodes de référence est exclusivement réalisée électrochimiquement. Plusieurs méthodes pour cette activation électrochimique des électrodes existent, les plus courantes consistant à :
(1) charger ou décharger partiellement l'électrode de référence dans un premier dispositif à deux électrodes (par exemple, en demi-pile avec une contre-électrode de lithium), puis démonter l'assemblage afin de récupérer l'électrode de référence « activée », éventuellement rincer celle-ci, avant de l'insérer dans la cellule électrochimique à laquelle elle est destinée. Toutefois, dans le cadre de cette variante, l'étape de transposition de l'électrode d'une cellule à une autre induit un risque de détérioration de l'électrode de référence.
(2) réaliser une charge ou décharge partielle de l'électrode de référence au niveau d'un montage à trois électrodes, directement au sein de la cellule électrochimique à laquelle l'électrode de référence est destinée, en connectant, dans un premier stade, l'électrode de référence en tant qu'électrode de travail puis, après activation, en réalisant la connexion à trois électrodes avec l'électrode de référence.

Cette approche, si elle permet d'éviter l'étape de démontage requise dans la première variante précitée, n'est toutefois pas sans présenter des inconvénients. De fait, l'étape d'activation a pour conséquence de consommer une partie de la capacité de la cellule, et le contrôle de l'état de charge de l'électrode de référence est délicat. De plus, cette approche requiert de connaître la quantité exacte de matière active déposée ou de réaliser une étape de quantification électrochimique (cycle de charge/décharge) pour connaître la capacité effective de l'électrode. Enfin, cette étape d'activation étant réalisée après l'étape de formation (premier(s) cycle(s) de charge/décharge) des cellules, il n'est pas possible d'avoir accès aux informations des potentiels durant la formation, alors qu'il s'agit d'une donnée intéressante.

### Exposé de l'invention

La présente invention vise précisément à proposer une nouvelle méthode de préparation des électrodes de référence, permettant de s'affranchir des inconvénients, discutés précédemment, liés à la nécessité d'activer au préalable l'électrode par voie électrochimique. Plus particulièrement, l'invention concerne un procédé de préparation d'une électrode de référence, directement fonctionnelle (ou utilisable) au sein d'une cellule d'un système de stockage électrochimique, comprenant au moins les étapes consistant en :
(i) disposer d'au moins un matériau électro-actif dont la réaction rédox associée présente un potentiel électrochimique constant (ou plateau de potentiel) à des états de charge intermédiaire ;
(ii) obtenir, par réaction chimique à l'aide d'au moins un agent oxydant et/ou d'au moins un agent réducteur, le matériau électro-actif dans un état de charge intermédiaire ; et
(iii) formuler ledit matériau électro-actif obtenu à l'issue de l'étape (ii) au sein d'une électrode, pour former ladite électrode de référence.

Comme évoqué précédemment, une électrode de référence est définie comme étant une électrode possédant un potentiel électrochimique stable et connu, permettant avantageusement de servir de point de référence pour mesurer indépendamment le potentiel des électrodes positive et négative dans une cellule électrochimique.

Par « directement fonctionnelle », on entend signifier que l'électrode préparée selon le procédé de l'invention est directement opérationnelle/utilisable comme électrode de référence. Elle peut ainsi être insérée au niveau d'une cellule électrochimique pour former une cellule à trois électrodes et être utilisée comme électrode de référence dès le premier cycle de charge/décharge de la cellule.

En particulier, l'électrode obtenue à l'issue de l'étape (iii) du procédé de l'invention ne nécessite aucune étape d'activation électrochimique, avant de pouvoir être opérationnelle comme électrode de référence.

Il est connu de pouvoir oxyder, respectivement réduire, des matériaux actifs à l'aide de différents agents chimiques oxydants, respectivement réducteurs. Par exemple, il est possible de délithier (oxyder) le LiFePO₄ à l'aide d'une solution de NO₂BF₄ dans l'acétonitrile ([2]).

En revanche, à la connaissance des inventeurs, il n'a jamais été proposé de tirer parti de la possibilité d'oxyder ou de réduire chimiquement des matériaux actifs pour obtenir un matériau électro-actif à un état de charge intermédiaire, pour la préparation d'une électrode de référence directement opérationnelle au niveau d'une cellule électrochimique.

Par « état de charge intermédiaire », on entend ainsi selon l'invention un état d'oxydation partielle/ réduction partielle (ou encore de lithiation partielle) dudit composé ou matériau électro-actif ou un mélange des formes oxydée et réduite dudit composé ou matériau électro-actif, correspondant au potentiel fixe (plateau de potentiel) de la réaction redox associée au composé électro-actif.

Dans une première variante de réalisation, le matériau électro-actif de départ (i) est un matériau apte à être oxydé (ou délithié), l'étape (ii) consistant à obtenir chimiquement ledit matériau électro-actif dans un état d'oxydation (ou état de délithiation) intermédiaire.

Le matériau électro-actif dans un état d'oxydation intermédiaire est de préférence obtenu par oxydation chimique partielle à l'aide d'au moins un agent oxydant.

Dans une seconde variante de réalisation, le matériau électro-actif de départ (i) est un matériau apte à être réduit, l'étape (ii) consistant à obtenir chimiquement ledit matériau électro-actif dans un état de réduction (ou état de lithiation) intermédiaire.

Le matériau électro-actif dans un état de réduction intermédiaire est de préférence obtenu par réduction chimique partielle à l'aide d'au moins un agent réducteur.

Le procédé de préparation d'une électrode de référence selon l'invention peut ainsi plus particulièrement comprendre les étapes consistant en :
(i) disposer d'au moins un matériau électro-actif, dont la réaction rédox associée présente un potentiel électrochimique constant à des états d'oxydation ou de réduction intermédiaire, dit « états de charge intermédiaire », en particulier pour un état de lithiation/délithiation intermédiaire ;
(ii) procéder à une oxydation chimique partielle ou à une réduction chimique partielle dudit matériau électro-actif par réaction avec au moins un agent oxydant ou réducteur, pour obtenir le matériau électro-actif dans un état de charge intermédiaire ; et
(iii) formuler ledit matériau électro-actif obtenu à l'issue de l'étape (ii) au sein d'une électrode, pour former ladite électrode de référence.

Avantageusement, comme évoqué précédemment, le procédé de l'invention permet d'obtenir une électrode directement fonctionnelle/opérationnelle lorsqu'elle est intégrée au sein d'une cellule électrochimique à trois électrodes.

De manière avantageuse, le procédé selon l'invention permet ainsi de s'affranchir de toute étape électrochimique, préalable à l'utilisation de l'électrode comme électrode de référence, qui serait susceptible, comme discuté précédemment, de détériorer l'électrode de référence ou de perturber le fonctionnement du système électrochimique.

Ainsi, le procédé de préparation d'une électrode de référence selon l'invention n'intègre aucune étape électrochimique d'activation, préalablement au fonctionnement de l'électrode de référence au sein d'une cellule à trois électrodes, que ce soit au sein d'une cellule électrochimique distincte de celle dans laquelle l'électrode de référence est destinée à être mise en oeuvre ou au sein de la cellule du système électrochimique dans laquelle elle sera utilisée.

Par ailleurs, le procédé de l'invention permet d'obtenir un bon contrôle de l'état de charge du matériau d'électrode de référence.

L'électrode de référence fonctionnelle préparée selon le procédé de l'invention peut être mise en oeuvre pour divers systèmes de stockage électrochimique ou générateurs électrochimiques, et notamment pour des batteries métal-ion, par exemple des batteries sodium-ion, lithium-ion, potassium-ion, magnésium-ion ; des batteries lithium-soufre ou lithium-air, et supercondensateurs, par exemple des supercondensateurs hybrides au potassium.

Elle peut ainsi être directement intégrée à une cellule d'un tel système de stockage électrochimique ou générateur électrochimique, pour former une cellule à trois électrodes : une électrode positive, une électrode négative et l'électrode de référence préparée selon l'invention.

L'intégration d'une électrode de référence obtenue selon le procédé de l'invention au sein d'au moins l'une des cellules d'un système de stockage électrochimique ou générateur électrochimique, permet avantageusement d'accéder aux potentiels de chacune des électrodes positive et négative, et ce dès le premier cycle de charge/décharge de la cellule. La connaissance et le suivi des potentiels des électrodes positive et négative permet de pouvoir détecter le cas échéant des défauts potentiels à leur fonctionnement.

Une surveillance des potentiels des électrodes positive et négative au cours du fonctionnement du système de stockage électrochimique, par l'intermédiaire de l'électrode de référence préparée selon l'invention, permet avantageusement une utilisation optimisée dudit système électrochimique, en particulier une utilisation à sa capacité maximale, sans pour autant s'exposer à des risques de dysfonctionnement, et permet ainsi une sûreté améliorée à l'usage dudit système électrochimique.

D'autres caractéristiques, variantes et avantages du procédé de préparation d'une électrode de référence selon l'invention et de sa mise en oeuvre au niveau d'une cellule d'un système de stockage électrochimique, ressortiront mieux à la lecture de la description, des exemples et figures qui vont suivre, donnés à titre illustratif et non limitatif de l'invention.

### Brève description des dessins

[Fig 1] présente, de manière schématique, en coupe transversale, un exemple d'assemblage 100 des différents éléments, y compris l'électrode de référence préparée selon l'invention, au sein d'une cellule d'un système de stockage électrochimique ;
[Fig 2] présente le diffractogramme obtenu par analyse DRX (diffraction par rayons X) de la poudre préparée en exemple 1.1. par délithiation partielle du LiFePO₄ ;
[Fig 3] présente l'évolution du courant (en A) et du potentiel (en V) au cours des cycles de charge/décharge réalisés suivant l'exemple 1.2., avec l'électrode de référence assemblée en demi-pile ;
[Fig 4] présente l'évolution du potentiel (en V *vs* Li⁺/Li) en fonction de la capacité spécifique massique (en mAh/g) lors des deux cycles de charge/décharge réalisés suivant l'exemple 1.2., avec l'électrode de référence assemblée en demi-pile ;
[Fig 5] présente, de manière schématique, la soudure d'une électrode sur une languette de connexion en aluminium comme réalisé en exemple 1 ;

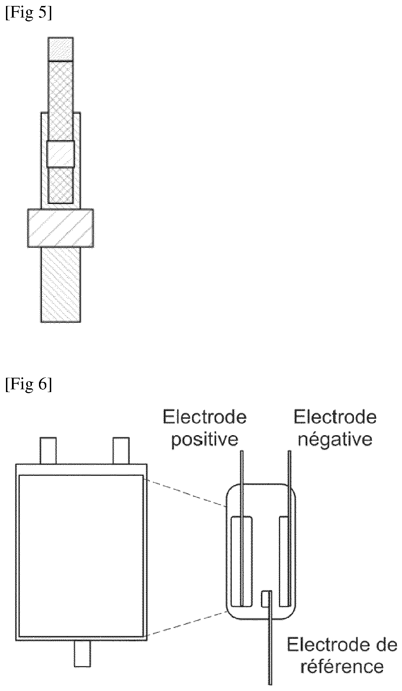

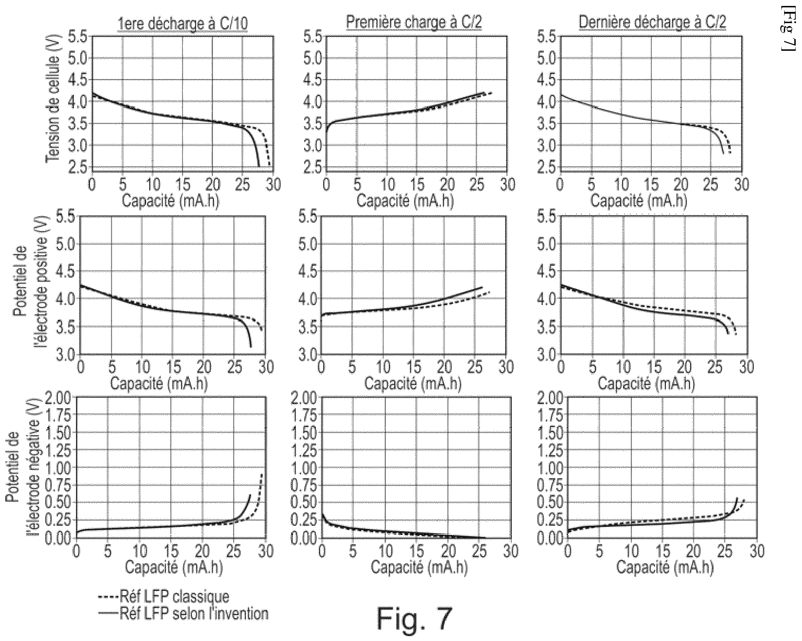

[Fig 6] présente, de manière schématique, la cellule lithium-ion, au format pouch-cell, préparée en exemple 2, comprenant une électrode de référence préparée selon l'invention ; [Fig 7] présente les courbes d'évolution de la tension de cellule de la batterie lithium-ion, et des potentiels des électrodes positive et négative, en fonction de la capacité, obtenues à l'aide d'une électrode de référence préparée selon l'invention, et à l'aide d'une électrode de référence classique (nécessitant une activation) pour une première décharge à C/10, une première charge à C/2 et une décharge à C/2, comme décrit en exemple 2 ;
[Fig 8] présente les courbes d'évolution de la tension de cellule de la batterie lithium-ion, en charge et décharge galvanostatique, à différents régimes, obtenues à l'aide d'une électrode de référence préparée selon l'invention et une électrode de référence classique, comme décrit en exemple 2.

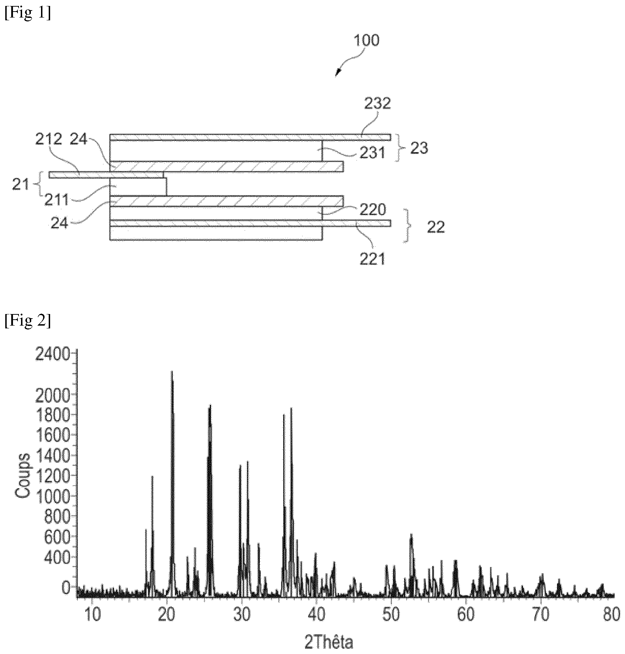

Il convient de noter que, pour des raisons de clarté, les différents éléments sur les figures 1, 5 et 6 sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### Etape (i) : Matériau électro-actif

Comme indiqué précédemment, le procédé de l'invention met en oeuvre un ou plusieurs matériaux électro-actifs dont la réaction électrochimique d'oxydo-réduction, dite également réaction rédox, associée au passage réversible d'un état réduit du matériau électro-actif à un état oxydé, a la particularité de présenter un potentiel électrochimique constant ou plateau de potentiel électrochimique.

Le plateau de potentiel, associé à un matériau électro-actif, peut être identifié par un test en cyclage d'une électrode à base dudit matériau électro-actif, assemblée en demi-cellule ou en cellule complète, par exemple sous forme de pile-bouton, en opérant une charge ou une décharge en mode galvanostatique. Le potentiel électrochimique constant correspond au plateau de potentiel observé au niveau des courbes de charge/décharge à courant constant (par exemple, courbes de variation du potentiel E en fonction du temps ou en fonction de la capacité absolue ou spécifique massique lors d'un cyclage en mode galvanostatique). A noter qu'en cellule complète (c'est toujours le cas en demi-cellule avec une contre-électrode de lithium), ce plateau de potentiel n'est observable que si la contre-électrode utilisée (qui joue alors le rôle de référence) présente également un plateau de potentiel lors de sa charge/décharge à courant constant.

Le plateau de potentiel est ainsi atteint pour des états de charge intermédiaire, pouvant généralement aller de 5% à 95% de la charge (oxydation ou réduction) complète.

Bien entendu, la valeur du plateau de plateau de potentiel dépend du couple rédox associé au matériau électro-actif mis en oeuvre.

Comme indiqué précédemment, par « état de charge intermédiaire », on entend ainsi selon l'invention un état d'oxydation partielle/ réduction partielle (ou encore de lithiation partielle) dudit composé ou matériau électro-actif ou un mélange des formes oxydée et réduite dudit composé ou matériau électro-actif, correspondant au potentiel fixe (plateau de potentiel) de la réaction redox associée au composé électro-actif.

Le ou les matériaux électro-actifs à partir desquels est préparée une électrode de référence selon l'invention peuvent être choisis parmi les matériaux usuellement mis en oeuvre pour former des électrodes de référence activées par voie électrochimique, comme évoqué précédemment.

Selon une première variante de réalisation, le matériau électro-actif mis en oeuvre pour préparer une électrode de référence selon le procédé de l'invention est un matériau apte à être oxydé (en particulier, apte à être délithié), et pouvant ainsi présenter un état d'oxydation (en particulier de délithiation) intermédiaire correspondant en cyclage galvanostatique au plateau de potentiel.

De tels matériaux peuvent être par exemple choisis parmi des matériaux d'intercalation (ou insertion) de type LiMO₂ avec M représentant Co, Ni ou Mn ; LiM'₂O₄ avec M' représentant Ni ou Mn ; et LiM"PO₄ avec M" représentant Fe, Co, Mn ou Ni ;
Il peut encore s'agir de matériaux organiques électro-actifs de type P dont la réaction rédox associée présente un potentiel électrochimique constant.

Par matériau, dit encore composé, « organique », on entend un composé, en particulier de nature moléculaire, oligomérique ou polymérique, de la chimie du carbone, comportant des atomes de carbone et d'hydrogène, et un ou plusieurs hétéroatomes choisis parmi l'oxygène, l'azote, le soufre, le phosphore, ces atomes et hétéroatomes étant uniquement liés par des liaisons covalentes, ce composé pouvant être sous forme d'un sel, par exemple un sel métallique.

Par matériau électro-actif « de type P » ou « donneur d'électrons », on entend désigner un matériau organique pouvant subir, du fait de la nature de ses fonctions électroactives ou fonctions rédox, une oxydation réversible de l'état neutre vers un état chargé positivement, avec une compensation de charge anionique.

Le mécanisme électrochimique associé à un matériau de type P peut être schématisé comme suit :

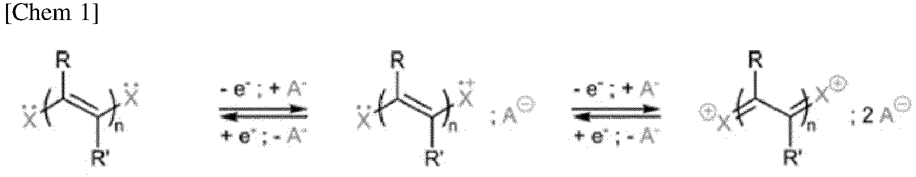

Les matériaux organiques électro-actifs de type P considérés selon l'invention peuvent être choisis parmi les matériaux organiques, molécules, oligomères ou polymères organiques, déjà proposés comme matériaux actifs d'électrodes organiques, par exemple pour des batteries. De tels matériaux sont documentés dans la littérature [3].

En particulier, de tels matériaux organiques électro-actifs de type P peuvent être choisis parmi des composés, en particulier des molécules, oligomères ou polymères, porteurs de fonctions rédox choisies parmi :
- des radicaux stables O^{•}, N^{•} ou NO^{•}, en particulier des fonctions nitroxyde (NO^{•}) ou phénoxy (PhO^{•}) ;

De tels polymères peuvent être par exemple choisis parmi les polymères possédant un squelette linéaire choisi parmi les poly(méth)acrylates, les polythiophènes, les polyfluorènes, les polycarbazoles, les polyanilines, les polyphénylènes, les polyisothionaphtènes, les polyacétylènes, les polyphénylènevinylènes, et leurs copolymères ; et porteurs d'au moins des groupements latéraux possédant au moins un radical stable de type O^{•}, N^{•} ou NO^{•}, en particulier possédant au moins une fonction nitroxyde et/ou phénoxy, en particulier au moins une fonction nitroxyde.

Il peut s'agir par exemple de polymères porteurs de groupements latéraux de structure 2,2,6,6-tétraméthylpipéridinyl-N-oxy (TEMPO), tels qu'un poly(2,2,6,6-tétraméthylpipéridinyloxy-4-yl méthacrylate), noté PTMA.
- des fonctions éther (-O-) ou thioéther (-S-) conjuguées ; tels que le thianthrène, la phénothiazine, et leurs dérivés de type oligomères ou polymères ; les polymères conducteurs π-conjugués de type polythiophène (PT), par exemple le poly(3,4-éthylènedioxythiophène), plus connu sous l'appellation « PEDOT » ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et d'autres polymères conducteurs π-conjugués, tels que les polythiophènes, les polyanilines et les polypyrroles, par exemple les polyacétylènes.

Le matériau organique de type P peut se présenter sous différentes formes, pour autant qu'elles autorisent l'oxydation chimique partielle dudit matériau organique de type P de manière à atteindre l'état de charge intermédiaire souhaité. En particulier, le matériau de type P peut se présenter sous une forme telle qu'il ne se dégrade pas, en particulier ne se dissolve pas dans l'électrolyte de la cellule électrochimique dans laquelle l'électrode de référence sera mise en oeuvre.

Plusieurs stratégies sont connues pour insolubiliser les composés organiques rédox. Comme évoqué ci-dessus, l'une des stratégies les plus couramment utilisées consiste à préparer le composé organique rédox sous la forme de polymères ou copolymères, réticulés ou non, avec des fonctions rédox pendantes ou intramoléculaires.

Une autre stratégie pour insolubiliser les composés organiques électroactifs consiste à réaliser des structures composites par physisorption, avec un substrat inorganique, par exemple en silice, alumine, carbone, au sein desquelles se créent des liaisons faibles (hydrogène, interactions π- π, Van der Waals), permettant de limiter, voire d'empêcher la dissolution du composé organique rédox.

Il est également possible d'effectuer un greffage du composé organique électroactif sur un solide inorganique (silice, alumine, carbone, etc.) *via* des liaisons ioniques ou covalentes, par exemple par réaction acido-basique avec les hydroxyles de la surface de la silice ou par réaction de sels de diazonium, avec la surface du carbone, afin de former un composé hybride organique/inorganique insoluble.

Une autre stratégie consiste encore à ajouter des fonctions ioniques sur le composé organique électroactif, par exemple de type carboxylate, sulfonate, alcoolate, imidure, énolate, etc., permettant de limiter la dissolution du composé en milieu organique.

Dans un mode de réalisation particulièrement préféré, le matériau électro-actif mis en oeuvre pour la préparation d'une électrode de référence selon l'invention est choisi parmi les matériaux d'insertion de type LiM"PO₄ avec M" représentant Fe, Co, Mn ou Ni. Avantageusement, il peut s'agir du LiFePO₄ (ou LFP) dont la réaction rédox associé LiFePO₄/FePO₄ présente un plateau de potentiel à environ 3,424 V.

Selon une autre variante de réalisation, le matériau électro-actif mis en oeuvre pour préparer une électrode de référence selon le procédé de l'invention est un matériau apte à être réduit, et pouvant présenter un état de réduction intermédiaire correspondant en cyclage galvanostatique à un potentiel constant (plateau de potentiel).

De tels matériaux sont par exemple choisis parmi des matériaux d'intercalation/insertion de type Li₄Ti₅O₁₂.

Il peut encore s'agir de matériaux organiques électro-actifs de type N dont la réaction rédox associée présente un potentiel électrochimique constant.

Par matériau électro-actif « de type N » ou « accepteur d'électrons », on entend désigner un matériau organique pouvant subir, du fait de la nature de ses fonctions électroactives, une réduction réversible de l'état neutre vers un état chargé négativement, avec une compensation de charge cationique.

Le mécanisme électrochimique associé à un matériau de type N peut être schématisé comme suit :

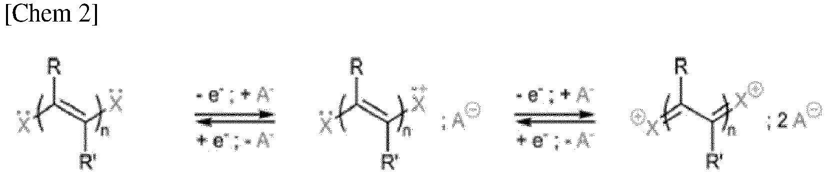

Les matériaux organiques électro-actifs de type N considérés selon l'invention peuvent être choisis parmi les matériaux organiques, molécules, oligomères ou polymères organiques, déjà proposés comme matériaux actifs d'électrodes organiques, par exemple pour des batteries, comme décrit dans la publication [3].

En particulier, de tels matériaux organiques électro-actifs de type N peuvent choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène. A titre d'exemple, un matériau organique électro-actif de type N peut être par exemple à base du tétracarboxylate de pérylène, également noté PTCLi₄.

Comme évoqué précédemment concernant les matériaux organiques de type P, le ou lesdits composés organiques de type N, porteurs de motifs rédox tels que considérés ci-dessus, peuvent se présenter sous différentes formes, telles qu'indiquées ci-dessus, pour autant qu'elles autorisent la réduction chimique partielle dudit matériau organique de type N en présence d'un agent réducteur de manière à obtenir l'état de charge intermédiaire souhaité.

Dans un mode de réalisation particulièrement préféré, le matériau électro-actif mis en oeuvre pour la préparation d'une électrode de référence selon l'invention est le Li₄Ti₅O₁₂ (ou LTO), dont la réaction rédox associée présente un plateau de potentiel à environ 1,5 V.

Le matériau électro-actif en étape (i) du procédé de l'invention se présente de préférence sous la forme d'une poudre.

### Etape (ii) : Oxydation/ réduction chimique

Comme indiqué précédemment, le procédé de l'invention comprend une étape (ii) d'obtention, par synthèse chimique à l'aide d'agent(s) oxydant(s) et/ou réducteur(s), dudit matériau électro-actif dans un état de charge intermédiaire.

De préférence, l'étape (ii) procède, pour un matériau électroactif apte à être oxydé (respectivement, apte à être réduit) à une oxydation chimique partielle (respectivement, à une réduction chimique partielle) dudit matériau électro-actif de départ, à l'aide d'au moins un agent chimique oxydant (respectivement à l'aide d'au moins un agent chimique réducteur).

Bien entendu, la nature de l'agent oxydant (respectivement, de l'agent réducteur), ainsi que les conditions de la réaction d'oxydation (respectivement, de réduction), sont ajustées au regard de la nature du matériau électro-actif que l'on cherche à oxyder (respectivement, à réduire) partiellement.

A titre d'exemples d'agents oxydants, on peut citer : le tétrafluoroborate de nitronium (NO₂BF₄), le tétrafluoroborate de nitrosyle (NOBF₄), le persulfate de potassium (K₂S₂O₈), le nitrate de sodium (NaNO₃), le nitrile trifluorométhanesulfonate (NO₂CF₃SO₃), le permanganate de potassium (KMnO₄), l'acide nitrique (HNO₃), l'acide sulfurique (H₂SO₄), l'acide peroxydisulfurique (H₂S₂O₈), l'acide peroxymonosulfurique (H₂SO₅), le « Magic Blue » (Tris(4-bromophenyl)aminium hexachloridoantimonate), le peroxyde d'hydrogène (H₂O₂), le dioxyde de plomb (PbO₂), des peracides organiques tels que l'acide métachloroperbenzoïque (mCPBA), des cations métalliques tels que Ce⁴⁺, Ag⁺, Cu²⁺, des gaz tels que O₂, O₃, N₂O, etc.

A titre d'exemples d'agents réducteurs, on peut citer : les métaux alcalins tels que le lithium, le sodium, le potassium ; les hydrures tels que l'hydrure de lithium (LiH) et le borohydrure de sodium (NaBH₄), l'hydrogène, le carbone, des sels tels que le sulfite de sodium (Na₂SO₃), l'hydrosulfite de sodium (Na₂S₂O₄), le thiosulfate de sodium (Na₂S₂O₃), l'hydrazine (N₂H₄), l'iodure de lithium (LiI).

Les conditions de mise en oeuvre pour opérer l'oxydation ou la réduction chimique partielle sont bien entendu ajustées au regard du matériau électroactif et de l'agent oxydant ou réducteur mis en présence.

La réaction d'oxydation ou de réduction peut être réalisée en masse (en l'absence de solvant) ou par voie humide (en présence d'un ou plusieurs solvants).

A titre d'exemple, dans le cas où le matériau électro-actif est le LiFePO₄, l'étape (ii) peut être réalisée par oxydation chimique partielle du matériau à l'aide d'un agent oxydant, de préférence avec du NO₂BF₄, pour obtenir une poudre de Li₁₋ₓFePO₄, avec 0,30 ≤ x ≤ 0,70, en particulier 0,50 ≤ x ≤ 0,60. L'oxydation partielle du LiFePO₄ est plus particulièrement réalisée en milieu solvant, de préférence dans l'acétonitrile. Une telle réaction d'oxydation est par exemple décrite dans la publication [2].

L'obtention de la forme partiellement oxydée (ou partiellement réduite) du matériau électro-actif peut être contrôlée en ajustant les proportions molaires en matériau électro-actif et en agent oxydant (respectivement, agent réducteur) mis en oeuvre.

D'une manière générale, le ratio molaire entre ledit agent oxydant ou réducteur et ledit matériau électro-actif à oxyder ou réduire est compris entre 0,1 et 0,9, en particulier entre 0,4 et 0,6.

A titre d'exemple, dans le cas d'un matériau électro-actif d'intercalation/insertion de type LiMO₂ ; LiM'₂O₄ ou LiM"PO₄ décrits précédemment, par exemple de type LiFePO₄, les conditions d'oxydation sont ajustées pour obtenir le matériau dans un état de charge (état d'oxydation) intermédiaire, correspondant à un état de délithiation intermédiaire, en particulier avec un taux de délithiation allant de 30% à 70%, en particulier de 50% à 60%. Ainsi, selon un mode de réalisation particulier, dans le cas où ledit matériau électro-actif en étape (i) est un matériau électro-actif d'intercalation de type LiMO₂; LiM'₂O₄ ou LiM"PO₄, l'étape (ii) peut opérer une oxydation partielle dudit matériau pour obtenir ledit matériau dans un état de délithiation intermédiaire, en particulier avec un taux de délithiation allant de 30% à 70% et plus particulièrement de 50% à 60%.

Autrement dit, le matériau électro-actif dans un état de charge intermédiaire obtenu à l'issue de l'étape (ii) peut être plus particulièrement de composition Li₁₋ₓMO₂; Li₁₋ₓM'₂O₄ ou Li₁₋ₓM"PO₄, par exemple Li₁₋ₓFePO₄, avec 0,30 ≤ x ≤ 0,70, en particulier 0,50 ≤ x ≤ 0,60.

La formation en étape (ii) du matériau à un état de charge intermédiaire correspondant au plateau de potentiel peut être vérifiée par un test en cyclage (charge/décharge) d'une électrode à base dudit matériau obtenu, assemblée en demi-cellule ou cellule complète, par exemple en demi-pile, comme illustré dans les exemples.

Comme illustré dans les exemples, dans le cas du LiFePO₄, le matériau dans un état de charge intermédiaire est caractérisé par un comportement biphasique, avec la coexistence de deux phases cristallographiques différentes (phases totalement lithiée et totalement délithiée) identifiables par exemple par analyse par diffraction des rayons X (DRX).

Dans le cas d'un matériau de type LiMO₂, cet état de charge intermédiaire se traduit par un phénomène de solution solide, avec le métal M présent à des degrés d'oxydations mixtes (M(III) et M(IV)) dans les cristaux.

Il est entendu que la réaction dudit matériau électro-actif avec le ou lesdits agents d'oxydation ou de réduction peut être suivie d'une ou plusieurs étapes d'élimination du ou des solvants et/ou de lavage du matériau obtenu.

De préférence, le matériau électro-actif à un état de charge intermédiaire est obtenu en étape (ii) sous la forme d'une poudre, de préférence avec une granulométrie adaptée pour une mise en oeuvre aisée lors de la formulation de l'encre à base dudit matériau électro-actif pour la préparation de l'électrode en étape (iii).

Dans un mode de réalisation particulier, l'étape (ii) peut ainsi comprendre une étape de broyage du matériau électro-actif obtenu, à sec ou en voie humide, permettant d'obtenir le matériau électro-actif sous la forme d'une poudre.

Dans un mode de réalisation particulier, le procédé de l'invention est mis en oeuvre pour préparer une électrode de référence à partir du LiFePO₄, et comprend plus particulièrement les étapes consistant en :
(i) disposer d'une poudre de LiFePO₄,
(ii) procéder à une oxydation chimique partielle de ladite poudre de LiFePO₄, en particulier par réaction avec du NO₂BF₄ à titre d'agent oxydant dans l'acétonitrile, pour obtenir une poudre de Li₁₋ₓFePO₄, avec 0,30 ≤ x ≤ 0,70, en particulier 0,50 ≤ x ≤ 0,60 ; et
(iii) formuler ladite poudre de Li₁₋ₓFePO₄ obtenue en étape (ii) au sein d'une électrode, pour former ladite électrode de référence directement fonctionnelle.

Il est entendu que des variantes de synthèse chimique, autres que les variantes décrites précédemment, peuvent être considérées pour obtenir en étape (ii) le matériau dans un état de charge intermédiaire. Par exemple, dans le cas de la mise en oeuvre du procédé de l'invention à partir d'un matériau électro-actif apte à être oxydé, par exemple du LiFePO₄, l'étape (ii) peut procéder en une première étape d'oxydation chimique totale (délithiation totale) du matériau à l'aide d'au moins un agent oxydant, par exemple par du NO₂BF₄ (obtention du FePO₄), suivie d'une réduction partielle à l'aide d'au moins un agent réducteur pour atteindre l'état de charge intermédiaire (Li_{y}FePO₄ avec 0,30 ≤ y ≤ 0,70, en particulier 0,40 ≤ y ≤ 0,50).

### Etape (iii) : Formulation du matériau électro-actif à un état de charge intermédiaire au sein d'une électrode

Comme indiqué précédemment, le procédé de l'invention comprend une étape (iii) d'intégration du matériau électro-actif à un état de charge intermédiaire, obtenu à l'issue de l'étape (ii), de préférence sous la forme d'une poudre, au sein d'une électrode.

L'intégration du matériau électro-actif au niveau d'une électrode peut être opérée par toute méthode conventionnelle de préparation des électrodes.

La formulation dudit matériau électro-actif au niveau d'une électrode peut ainsi comprendre au moins les étapes suivantes :
- préparation d'une dispersion, plus couramment appelée « encre », comprenant, dans un ou plusieurs solvants aqueux et/ou organiques, ledit matériau électro-actif à un état de charge intermédiaire obtenu à l'issue de l'étape (ii) ; un ou plusieurs liants et éventuellement un ou plusieurs additifs conducteurs électroniques ;
- dépôt de l'encre à la surface d'un collecteur de courant ;
- évaporation du ou desdits solvant(s) de l'encre pour former le film d'électrode ; et de préférence
- calandrage de l'électrode.

Le solvant de l'encre peut comprendre de l'eau et/ou un ou plusieurs solvants organiques, par exemple de la N-méthyl-2-pyrrolidone.

Les additifs conducteurs électroniques sont mis en oeuvre pour améliorer la conductivité électronique de l'électrode. Ils peuvent être choisis par exemple parmi des fibres de carbone, du noir de carbone, des nanotubes de carbone et leurs mélanges.

Le ou lesdits additifs conducteurs électroniques, lorsqu'ils sont présents, peuvent être mis en oeuvre de préférence en une teneur allant de 1 à 10 % massique, en particulier de 2 à 8 % massique, par rapport à la masse l'électrode. Il est entendu que la masse totale de l'électrode n'inclut pas la masse du collecteur de courant.

Les liants sont mis en oeuvre pour assurer la tenue mécanique de l'électrode sur le collecteur de courant, la cohésion des différents composants de l'électrode ou encore ses propriétés de flexibilité. Ils peuvent être choisis parmi des liants polymères, en particulier choisis parmi les polymères fluorés, par exemple parmi le polytétrafluoroéthylène (PTFE), le polyfluorure de vinylidène (PVDF), les polymères dérivés de carboxyméthylcellulose (CMC), les polysaccharides et les latex notamment de type caoutchouc styrène-butadiène (BR ou en langue anglaise « stryrene-butadiene rubber » (SBR)).

Un liant particulièrement préféré est le poly(fluorure de vinylidène) (PVDF).

Le ou lesdits liants peuvent être présents en une quantité inférieure ou égale à 20 % massique, par rapport à la masse totale de l'électrode, en particulier inférieure ou égale à 10 % massique, notamment comprise entre 1 et 10 % massique, par rapport à la masse totale de l'électrode. Il est entendu que la masse totale de l'électrode n'inclut pas la masse du collecteur de courant.

L'encre peut être homogénéisée avant son étalement.

Le dépôt de l'encre à la surface du collecteur de courant peut être opéré par toute technique connue de l'homme du métier, par exemple par enduction, par une technique d'impression, par extrusion ou par colaminage.

Le collecteur de courant peut être plein, par exemple sous la forme d'un feuillard ou sous la forme d'une grille.

Le collecteur de courant peut être en un matériau métallique choisi parmi le cuivre, l'aluminium, le nickel ou l'inox potentiellement revêtu de carbone.

L'évaporation du ou des solvants de l'encre peut être opérée par séchage, par exemple à l'étuve, à une température comprise entre 20 et 150 °C, notamment entre 50 et 80°C, en particulier pendant une durée comprise entre 1 et 15 heures.

De préférence, l'étape de séchage de l'encre est suivie d'une étape de calandrage.

Le ou lesdits matériau(x) actif(s) à un état de charge intermédiaire peu(ven)t représenter de 5 à 98 % massique, en particulier au moins 30 % massique, notamment au moins 50 % massique et plus particulièrement de 70 à 96 % massique, par rapport à la masse totale de l'électrode, exclusion faite de la masse du collecteur de courant.

Le grammage de l'électrode, autrement dit la masse de matériau électro-actif à un état de charge intermédiaire mis en oeuvre selon l'invention, par unité de surface, peut être ajusté en contrôlant le taux de matériau actif et l'épaisseur de dépôt, notamment d'enduction, de l'encre formulée sur le collecteur de courant. De préférence, le grammage de l'électrode est compris entre 0,1 mg/cm² et 50 mg/cm², en particulier entre 1 mg/cm² et 30 mg/cm², et plus particulièrement entre 3 mg/cm² et 10 mg/cm².

### SYSTEME DE STOCKAGE ELECTROCHIMIQUE

Comme indiqué précédemment, l'électrode obtenue à l'issue de l'étape (iii) est directement fonctionnelle comme électrode de référence. Autrement dit, elle peut être utilisée comme électrode de référence, sans étape préalable, au sein d'une cellule d'un système de stockage électrochimique ou générateur électrochimique.

En particulier, le procédé de préparation d'une électrode de référence selon l'invention ne comprend aucune étape d'activation par voie électrochimique de l'électrode obtenue à l'issue de l'étape (iii), préalablement à son fonctionnement comme électrode de référence. Les systèmes de stockage électrochimique, dans lesquels une électrode de référence obtenue selon l'invention peut être incorporée, peuvent être divers. Il peut s'agir d'une batterie métal-ion, notamment des batteries au sodium, au lithium, au potassium, au magnésium ; d'une batterie lithium-soufre ou lithium-air.

Il peut encore s'agir d'un supercondensateur, en particulier d'un supercondensateur « standard » ou d'un supercondensateur dit « hybride », en particulier d'un supercondensateur hybride au potassium.

La cellule du système de stockage électrochimique peut comprendre typiquement une électrode positive, une électrode négative et un électrolyte, notamment imprégnant une membrane poreuse séparant lesdites électrodes.

Il peut également s'agir d'une cellule à base d'une membrane électrolyte céramique, ou encore à base d'un électrolyte solide, par exemple d'un électrolyte polymérique solide ou électrolyte solide hybride.

L'électrode de référence préparée selon le procédé de l'invention est ainsi intégrée en tant que troisième électrode au niveau de la cellule du système de stockage électrochimique.

L'invention concerne ainsi, selon un autre de ses aspects, un procédé de préparation d'une cellule d'un système de stockage électrochimique, par exemple d'une batterie au lithium, comprenant une étape de préparation d'une électrode de référence selon le procédé tel que décrit précédemment, suivie d'une étape d'intégration de ladite électrode de référence au niveau d'une cellule d'un système de stockage électrochimique pour obtenir une cellule à trois électrodes.

Une cellule d'un système de stockage électrochimique, au sein de laquelle une électrode de référence obtenue selon l'invention est utilisée, est ainsi un système à trois électrodes, comportant plus particulièrement :
- une électrode positive ;
- une électrode négative ; et
- ladite électrode de référence préparée selon le procédé de l'invention tel que décrit précédemment.

La nature des éléments constituant la cellule du système de stockage électrochimique, en particulier des électrodes positive et négative et de l'électrolyte, dépend bien entendu du type de dispositif considéré, suivant qu'il s'agisse d'une batterie métal-ion, d'une batterie lithium-soufre, lithium-air, d'un supercondensateur, etc.

Le ou lesdits matériau(x) actif(s) de l'électrode négative peu(ven)t être notamment choisi(s) parmi du carbone activé, des matériaux carbonés d'intercalation d'un élément alcalin tel que du graphite ; du silicium ; des matériaux de conversion du type MO₂ avec M représentant par exemple Sn (SnO₂), Si (SiO₂), ou du type M₃O₄ avec M représentant par exemple Co (Co₃O₄), Mn (Mn₃O₄) etc., des métaux (Li, Na, K, Mg, Ca) et alliages à base de ces métaux, des oxydes de titane de type Li₄Ti₅O₁₂.

Le ou lesdits matériau(x) actif(s) de l'électrode positive peu(ven)t être notamment choisi(s) parmi du carbone activé, du LiMO₂ ou LiM₂O₄ avec M représentant Mn, Co, Ni ou l'une de leurs combinaisons, par exemple du LiNi_{0,6}Mn_{0,2}Co_{0,2}O₂ ; du LiMPO₄ avec M représentant Fe, Mn ou une de leurs combinaisons.

L'exemple qui suit, en référence à la mise en oeuvre d'une électrode de référence préparée selon le procédé de l'invention au niveau d'une cellule d'une batterie lithium-ion, est ainsi donné uniquement à titre illustratif de l'invention, étant entendu que l'utilisation d'une électrode de référence obtenue selon l'invention n'est aucunement limitée à ce mode particulier de mise en oeuvre.

Ainsi, à titre d'exemple de mise en oeuvre, une électrode de référence préparée selon le procédé de l'invention est introduite au niveau d'une batterie au lithium, en particulier d'une batterie lithium-ion.

Une électrode de référence préparée selon l'invention peut être par exemple mise en oeuvre au niveau d'une cellule d'une batterie lithium-ion comportant par ailleurs :
- une électrode positive comprenant un matériau actif positif, par exemple du LiNi_{0,6}Mn_{0,2}Co_{0,2}O₂ ;
- une électrode négative comprenant un matériau actif négatif, par exemple à base de graphite ; et
- un électrolyte comprenant au moins un sel de lithium par exemple du LiPF₆, dans un ou plusieurs solvants organiques, par exemple choisi parmi des solvants carbonates, tels que du carbonate d'éthylène (EC), du carbonate de diéthyle (DEC) et/ou du carbonate de diméthyle (DMC).

Il est entendu que les différents éléments sont assemblés au sein de la cellule du système de stockage électrochimique, par exemple de la batterie ou du supercondensateur, de sorte, d'une part, à permettre une utilisation efficace de l'électrode de référence, par exemple à des fins de connaître les potentiels des électrodes positive et négative et, d'autre part, de sorte que la présence de cette troisième électrode n'interfère pas négativement au niveau du fonctionnement de la cellule dudit système de stockage électrochimique.

En particulier, l'électrode de référence peut être utilisée lorsque la cellule dudit système de stockage électrochimique est soumise à un cyclage pour des courants allant de C/100 à 100C, notamment de C/50 à 100C, et plus particulièrement de C/50 à 5C, en particulier de C/2 à 5C, à des températures allant de -40°C à 100°C.

D'une manière générale, les différentes électrodes de la cellule du système de stockage électrochimique sont séparées les unes des autres par une membrane poreuse, dite encore « séparateur », imprégnée par l'électrolyte.

De tels séparateurs poreux peuvent être par exemple en polyéthylène, en polypropylène. La cellule du système de stockage électrochimique peut présenter avantageusement une configuration de couches superposées. Autrement dit, l'assemblage de la cellule peut être réalisé par empilement des différents éléments sous la forme de couches.

Chacune des électrodes d'une cellule du système de stockage électrochimique peut se présenter sous la forme d'une couche du matériau d'électrode, déposée sur au moins l'une des faces ou sur les deux faces d'un collecteur de courant se présentant sous la forme d'un film mince, par exemple sous la forme d'un feuillard métallique.

Selon une variante de réalisation, dans le cas d'une architecture de la cellule du système de stockage électrochimique sous la forme d'un empilement des différents éléments, l'électrode de référence peut être positionnée entre les électrodes positive et négative.

La Figure 1 représente, de manière schématique, en coupe transversale, un exemple d'assemblage 100 des différents éléments, intégrant une électrode de référence préparée selon l'invention, au sein d'une cellule d'un système de stockage électrochimique, à l'image par exemple de la cellule d'une batterie métal-ion.

Comme représenté sur cette figure, dans une variante de réalisation, une cellule d'un système de stockage électrochimique, par exemple d'une batterie métal-ion, dans laquelle une électrode de référence préparée selon l'invention est incorporée, peut comporter l'assemblage 100 des différents éléments suivants, dans cet ordre d'empilement :
- une électrode positive 22, en particulier formée d'une couche de matériau actif 220 sur un collecteur de courant 221, par exemple en aluminium ;
- un séparateur poreux 24, par exemple en polypropylène, destiné à être imprégné par l'électrolyte ;
- ladite électrode de référence 21, préparée comme décrit précédemment, formée d'une couche 211 du matériau d'électrode incorporant ledit matériau électro-actif à un état de charge intermédiaire, au niveau d'un collecteur de courant 212, par exemple en aluminium ;
- un séparateur poreux 24, par exemple en polypropylène, destiné à être imprégné par l'électrolyte ; et
- une électrode négative 23, en particulier formée d'une couche de matériau actif 231 sur un collecteur de courant 232, par exemple en aluminium.

Au sein de la cellule du système électrochimique, l'assemblage est trempé par un électrolyte comportant au moins un sel de métal alcalin ou alcalino-terreux, par exemple un sel de lithium dans le cas d'une batterie au lithium, dans un ou plusieurs solvants aqueux ou organiques.

Les séparateurs poreux assurent une isolation électronique entre les électrodes, tout en permettant un passage facile des ions de l'électrolyte. Bien entendu, d'autres configurations sont envisageables. Par exemple, il est possible d'enfermer l'électrode de référence dans un séparateur replié sur lui-même.

L'électrode de référence 21 préparée selon l'invention, intercalée au sein de l'assemblage entre les électrodes positive 22 et négative 23, présente avantageusement une surface dans un plan orthogonal à la direction d'empilement des différents éléments (électrodes et séparateurs), réduite comparativement aux surfaces des électrodes positive et négative dans ce même plan. De préférence, l'aire projetée de l'électrode de référence dans un plan orthogonal à la direction d'empilement, ne dépasse pas 10 %, en particulier 5 %, de l'aire projetée dans ce même plan des électrodes positive et négative.

L'invention n'est pas limitée à l'agencement représenté en figure 1. D'autres assemblages peuvent être considérés, pour autant qu'ils permettent d'assurer à la fois le fonctionnement de la cellule du système de stockage électrochimique et l'utilisation de l'électrode de référence. Des exemples de configuration de cellules à trois électrodes sont par exemple décrit dans le document US 9,379,418.

Une électrode de référence préparée selon l'invention peut avantageusement être mise en oeuvre dans la fabrication de batteries entièrement solides (batteries « tout solide »). Avantageusement, une électrode de référence préparée selon l'invention peut être mise en oeuvre dans des cellules de formats divers : cellules bobinées ou en stacking (empilage), en emballage rigide ou souple, en format prismatique ou cylindrique, etc.

Dans un mode de réalisation particulier, une électrode de référence préparée selon l'invention peut être intégrée dans une cellule d'un système de stockage électrochimique conditionnée dans un format prismatique, et en particulier sous la forme d'une « pouch cell » comme illustré dans les exemples. Une telle cellule « pouch cell » présente notamment un emballage flexible en aluminium-plastique.

De manière avantageuse, l'intégration d'une électrode de référence au niveau d'au moins l'une des cellules du système de stockage électrochimique permet de surveiller les potentiels des électrodes positive et négative, simultanément ou non, de manière continue, périodique, aléatoire ou à des moments prédéterminés, au cours du fonctionnement du système de stockage électrochimique.

Ainsi, la différence de potentiel entre l'électrode positive (respectivement, l'électrode négative) et l'électrode de référence permet de mesurer et de surveiller le potentiel de l'électrode positive (respectivement, l'électrode négative) par rapport à une valeur connue de potentiel, pendant le fonctionnement du supercondensateur.

Les branchements et circuits électriques externes à l'assemblage ne sont pas représentés sur les figures.

Le circuit externe entre l'électrode positive (respectivement, l'électrode négative) et l'électrode de référence peut être connecté électriquement à un moniteur de tension pour permettre d'indiquer ou d'enregistrer le potentiel de l'électrode positive (respectivement, l'électrode négative).

L'invention va maintenant être décrite au moyen des figures et exemples suivants, donnés bien entendu à titre illustratif et non limitatif de l'invention.

### EXEMPLE 1

### Préparation selon le procédé de l'invention d'une électrode de référence

### 1.1. Délithiation chimique partielle du LiFePO₄

5,12 g de matériau LiFePO₄ sont dispersés sous atmosphère d'argon dans 100 mL d'acétonitrile. 1,06 g de NO₂BF₄ (0,25 eq) est ajouté, puis le milieu réactionnel est agité pendant 48 heures, à température ambiante.

La suspension est ensuite filtrée, puis la poudre est lavée avec 4 x 100 mL d'acétronitrile avant d'être séchée à 60°C pendant 12 heures. 4,9 g de poudre noire sont obtenus.

La poudre ainsi préparée a été caractérisée par DRX (Figure 2).

Le diffractogramme obtenu montre la coexistence des phases LiFePO₄ et FePO₄.

### 1.2. Préparation d'une électrode de référence déposée sur un collecteur d'aluminium

Une encre composée de 90,5% du matériau préparé en étape 1.1. ; 5% de fibres de carbone VGCF (« vapor grown carbon fiber ») et 4,5% de liant polyfluorure de vinylidène (PVDF) a été préparée dans la N-méthylpyrrolidone et enduite sur un collecteur en aluminium.

Après séchage et pressage à 10 tonnes, l'électrode a été assemblée en demi-pile avec une contre-électrode de lithium métallique. Deux cycles de charge/décharge ont été réalisés à un régime C/10.

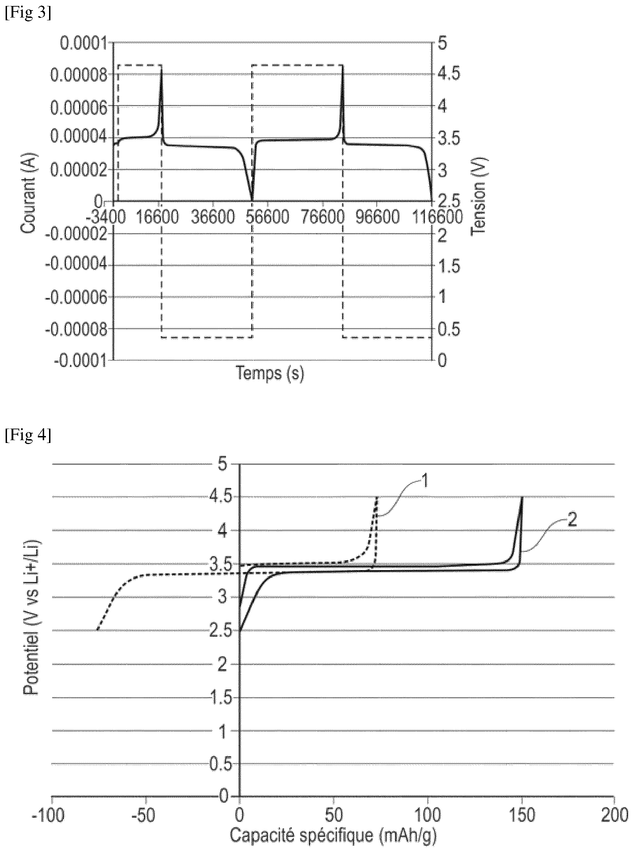

La figure 3 présente l'évolution du voltage et du courant avec le temps. La figure 4 présente l'évolution du potentiel (V vs Li⁺/Li) avec la capacité spécifique (mAh/g), au cours des deux premiers cycles.

Ce test montre que le potentiel de départ de l'électrode est de 3,5V vs Li⁺/Li, et donc bien sur le plateau de potentiel, et que l'état de charge de l'électrode est de 50%.

La composition du matériau d'électrode est donc Li_{0,5}FePO₄.

### 1.3. Préparation d'une électrode de référence sur une grille d'aluminium

Une encre composée de 90,5% du matériau préparé en étape 1.1. ; 5% de fibres de carbone VGCF et 4,5% de liant PVDF a été préparée dans la N-méthylpyrrolidone et enduite sur une grille d'aluminium.

Après séchage, les grilles enduites sont calandrées jusqu'à atteindre une épaisseur d'environ de 50 µm.

Après calandrage des grilles d'aluminium enduites, les électrodes de référence sont ensuite découpées.

Les électrodes découpées sont soudées aux ultrasons sur des languettes de connexion en aluminium, comme représenté schématiquement en figure 5.

### EXEMPLE 2

### Mise en oeuvre de l'électrode de référence au niveau d'une cellule d'une batterie

L'électrode de référence est introduite au niveau d'une cellule de batterie lithium-ion.

La réalisation du montage est effectuée au format « pouch cell », à partir des électrodes suivantes :
- l'électrode de référence préparée selon l'exemple 1.3 précité, prête à l'usage ;
- une électrode positive à base de LiNi_{0,6}Mn_{0,2}Co_{0,2}O₂ (2,9 mAh/cm²) ;
- une électrode négative à base de graphite (3,2 mAh/cm²).

Les électrodes sont séparées par deux séparateurs Celgard^{®}, et l'ensemble est imprégné d'un électrolyte à base de carbonate d'éthylène (EC)/ éthyl méthyl carbonate (EMC) (EC :EMC 3 :7 (vol)), du sel LiPF₆ (1 M) et 2 % massique de carbonate de vinylène (VC).

La figure 6 représente schématiquement la cellule au format pouch-cell ainsi obtenue.

Les performances de la cellule sont comparées avec celles de cellules similaires incorporant une électrode de référence classique à base de LiFePO₄ et nécessitant d'être activée au préalable.

Cette électrode de référence est une électrode de référence en LFP avec les mêmes paramètres d'encre et d'enduction que celle de l'invention, la seule différence étant que le LFP est incorporé à son état initial, sans étape préalable de délithiation chimique. Après fabrication, la cellule a été chargée à C/10, puis l'électrode de référence a été activée électrochimiquement.

La cellule intégrant une électrode de référence formée selon l'invention et la cellule intégrant une électrode de référence classique, sont soumis aux mêmes essais électrochimiques à 25°C, à savoir :
- Etape de formation (pour l'électrode comparative non activée)
- Décharge galvanostatique à différents régimes
- Charge galvanostatique à différents régimes.

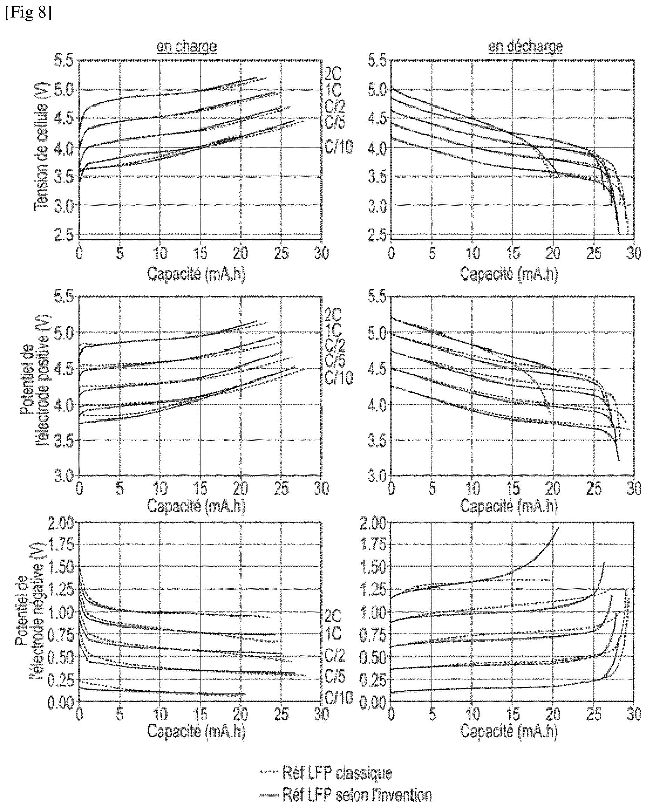

Les figures 7 et 8 présentent les courbes d'évolution du potentiel (V) avec la capacité (mAh.h) pour une première décharge à C/10, une première charge à C/2 et une dernière décharge à C/2, ainsi que pour différents régimes en charge et en décharge.

Ces essais montrent que les résultats obtenus sont comparables entre les cellules intégrant les électrodes de référence classiques et la cellule intégrant l'électrode de référence préparée selon l'invention.

En revanche, l'électrode de référence ne nécessite pas d'être activée avant d'être utilisable, contrairement aux électrodes de référence classiques.

Ainsi, les données peuvent être obtenues dès la première charge dite « étape de formation » dans le cas des électrodes classiques. En revanche, dans le cas d'une électrode de référence classique, nécessitant d'être préalablement activée au sein de la cellule dans laquelle elle est mise en oeuvre, la cellule subit tout d'abord une première charge ou « étape de formation », durant laquelle l'électrode de référence n'est pas utilisable.

### Références

[1] Cengiz et al., J. Electrochem. Soc. 2021 ;
[2] Yamada et al. Electrochem. Solid State Lett., 2005;
[3] Poizot et al., Chem. Rev. https://dx.doi.org/10.1021/acs.chemrev.9b00482.

## Revendications

1. Procédé de préparation d'une électrode de référence, directement fonctionnelle au sein d'une cellule d'un système de stockage électrochimique, ledit procédé comprenant au moins les étapes consistant en :
(i) disposer d'au moins un matériau électro-actif dont la réaction rédox associée présente un potentiel électrochimique constant à des états de charge intermédiaire ;
(ii) obtenir, par réaction chimique à l'aide d'au moins un agent oxydant et/ou d'au moins un agent réducteur, le matériau électro-actif dans un état de charge intermédiaire ; et
(iii) formuler ledit matériau électro-actif obtenu à l'issue de l'étape (ii) au sein d'une électrode, pour former ladite électrode de référence.

2. Procédé selon la revendication précédente, dans lequel ledit matériau électro-actif en étape (i) est un matériau apte à être oxydé, en particulier est choisi parmi :
• des matériaux d'intercalation de type LiMO₂ avec M représentant Co, Ni ou Mn ; LiM'₂O₄ avec M' représentant Ni ou Mn ; LiM"PO₄ avec M" représentant Fe, Co, Mn ou Ni ; et
• des matériaux organiques électro-actifs de type P dont la réaction rédox associée présente un potentiel électrochimique constant, notamment choisi parmi des composés, en particulier des molécules, oligomères ou polymères, porteurs de fonctions rédox choisies parmi :
- des radicaux stables O^{•}, N^{•} ou NO^{•}, en particulier des fonctions nitroxyde (NO^{•}) ou phénoxy (PhO^{•}) ; tels que par exemple des polymères porteurs de groupements latéraux de structure 2,2,6,6-tétraméthylpipéridinyl-N-oxy (TEMPO) ;
- des fonctions éther (-O-) ou thioéther (-S-) conjuguées ; tels que le thianthrène, la phénothiazine, et leurs dérivés de type oligomères ou polymères; les polymères conducteurs π-conjugués de type polythiophène (PT), par exemple le poly(3,4-éthylènedioxythiophène) ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et d'autres polymères conducteurs π-conjugués, tels que les polyacétylènes.

3. Procédé selon l'une quelconque des revendications précédentes, dans lequel ledit matériau électro-actif en étape (i) est un matériau d'insertion du type LiM"PO₄ avec M" représentant Fe, Co, Mn ou Ni, en particulier ledit matériau électro-actif en étape (i) est le LiFePO₄.

4. Procédé selon la revendication 2 ou 3, dans lequel l'étape (ii) opère une oxydation chimique partielle dudit matériau électro-actif à l'aide d'au moins un agent chimique oxydant, en particulier choisi parmi le tétrafluoroborate de nitronium (NO₂BF₄), le tétrafluoroborate de nitrosyle (NOBF₄), le persulfate de potassium (K₂S₂O₈), le nitrate de sodium (NaNO₃), le nitrile trifluorométhanesulfonate (NO₂CF₃SO₃), le permanganate de potassium (KMnO₄), l'acide nitrique (HNO₃), l'acide sulfurique (H₂SO₄), l'acide peroxydisulfurique (H₂S₂O₈), l'acide peroxymonosulfurique (H₂SO₅), le Magic Blue (Tris(4-bromophenyl)aminium hexachloridoantimonate), le peroxyde d'hydrogène (H₂O₂), le dioxyde de plomb (PbO₂), des peracides organiques tels que l'acide métachloroperbenzoïque (mCPBA), des cations métalliques tels que Ce⁴⁺, Ag⁺, Cu²⁺, des gaz tels que O₂, O₃, N₂O.

5. Procédé selon l'une quelconque des revendications 2 à 4, dans lequel ledit matériau électro-actif en étape (i) est un matériau électro-actif d'intercalation de type LiMO₂; LiM'₂O₄ ou LiM"PO₄, l'étape (ii) opérant une oxydation partielle dudit matériau pour obtenir ledit matériau dans un état de délithiation intermédiaire, en particulier avec un taux de délithiation allant de 30% à 70% et plus particulièrement de 50% à 60%.

6. Procédé selon la revendication 1, dans lequel ledit matériau électro-actif en étape (i) est un matériau apte à être réduit, en particulier est choisi parmi :
• des matériaux d'intercalation de type Li₄Ti₅O₁₂; et
• des matériaux organiques électro-actifs de type N dont la réaction rédox associée présente un potentiel électrochimique constant, notamment choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène.

7. Procédé selon la revendication précédente, dans lequel l'étape (ii) opère une réduction chimique partielle dudit matériau électro-actif à l'aide d'au moins un agent chimique réducteur, en particulier choisi parmi les métaux alcalins tels que le lithium, le sodium, le potassium ; les hydrures tels que l'hydrure de lithium (LiH) et le borohydrure de sodium (NaBH₄), l'hydrogène, le carbone, des sels tels que le sulfite de sodium (Na₂SO₃), l'hydrosulfite de sodium (Na₂S₂O₄), le thiosulfate de sodium (Na₂S₂O₃), l'hydrazine (N₂H₄), l'iodure de lithium (LiI).

8. Procédé selon l'une quelconque des revendications 1 à 5, dans lequel ledit matériau en étape (i) est le LiFePO₄, l'étape (ii) étant réalisée par oxydation chimique partielle l'aide d'un agent oxydant, en particulier par réaction avec du NO₂BF₄ à titre d'agent oxydant dans l'acétonitrile, pour obtenir une poudre de Li₁₋ₓFePO₄, avec 0,30 ≤ x ≤ 0,70, en particulier 0,50 ≤ x ≤ 0,60.

9. Procédé selon l'une quelconque des revendications précédentes, dans lequel ledit matériau à un état de charge intermédiaire obtenu à l'issue de l'étape (ii) se présente sous la forme d'une poudre.

10. Procédé selon l'une quelconque des revendications précédentes, dans lequel l'étape (iii) de formulation dudit matériau électro-actif au niveau d'une électrode comprend au moins les étapes suivantes :
- préparation d'une dispersion, appelée « encre », comprenant, dans un ou plusieurs solvants aqueux et/ou organiques, ledit matériau électro-actif obtenu à l'issue de l'étape (ii) ; un ou plusieurs liants et éventuellement un ou plusieurs additifs conducteurs électroniques ;
- dépôt de l'encre à la surface d'un collecteur de courant ; et
- évaporation du ou desdits solvant(s) de l'encre pour former le film d'électrode ; et de préférence
- calandrage de l'électrode.
